# EUROPEAN PATENT APPLICATION

(11) **EP 1 659 147 A1**
(43) Date of publication of application: **24.05.2006**
(21) Application number: 05110746.4
(22) Date of filing: 15.11.2005
(51) Int. Cl.: C08K 3/26, B60C 1/00

(54) **Vulcanizable rubber composition with hydrotalcite having increased blow-out resistance**

(30) Priority: 23.11.2004 US 995872
(71) Applicant: THE GOODYEAR TIRE & RUBBER COMPANY, Akron, Ohio 44316-0001 (US)
(72) Inventor: Pilkington, Mervin Victor, Akron, Ohio 44319-2217 (US)
(74) Representative: Kutsch, Bernd

(57) **Abstract**

A vulcanizable rubber composition for use in vehicle endless-track pads and high-load pneumatic tires is disclosed, wherein the composition provides an increased resistance to blow-out when the vulcanizate product is exposed to high-repeated deflection. The rubber component of the composition consists essentially of one or more non-halogenated rubbers, and is compounded with hydrotalcite in an amount of 3-20 parts per hundred parts of the rubber component (phr). In one exemplary embodiment, the rubber component consists essentially of natural rubber. The present invention also provides an endless rubber track for a track-laying vehicle comprising a rubber pad that is vulcanizate of the vulcanizable rubber composition. In addition, the present invention provides a pneumatic tire for a high-load vehicle comprising a rubber tread that is a vulcanizate of the vulcanizable rubber composition.

## Description

### Field of the invention

This invention relates to rubber compounds having an increased resistance to blow-out, particularly compounds that are subjected to high, repeated deflection, such as endless rubber tractor and tank tracks and high-load pneumatic tires.

### Background of the invention

Track-laying vehicles are broadly used in military and agricultural applications for their superior tracking capability in rough terrain. Track-laying vehicles, wherein a continuous track is constantly laid down in the direction of movement of the associated vehicle, are well known. Examples of such track-laying devices are military tanks, personnel carriers, various tractors and other agricultural vehicles including, for example, combines and spreaders, as well as various earth moving machines. A track on a track-laying vehicle is under tremendous strain and severe wearing conditions when the vehicle is in operation. This is especially true with modern track-laying vehicles where the vehicle is expected to carry a high load and be capable of superior acceleration and speed.

Current track designs use rubber pads (track pads), also referred to as treads, to enhance traction, isolate vibration, reduce noise, and limit damage to paved surfaces. The pads can be made integral with the track, or can be bonded to steel plates that are then bolted to the track. Conventional tread members are molded of hard rubber materials. The durability of the rubber and thus the lifetime of the tread is always a problem in the design of a track. The most commonly seen problems with rubber-molded tread members are: overheating, which causes blow-outs and catastrophic failure of the rubber; chunking, where large pieces of rubber material fall off the tread member; and rapid wear due to the poor abrasion resistance of the rubber material. In the case of blow-outs, the severe overheating seems to cause the inside of the pad to vaporize. These problems with rubber track pads also exist with the treads of pneumatic tires that are subjected to high loads, such as tires on agricultural and industrial equipment.

There is a need to provide a rubber compound that has an increased resistance to blow-out when exposed to high-repeated deflection, for use in endless rubber tracks and other high-load tires. Previous efforts to improve blow-out resistance generally involve materials that reduce or prevent thermal or mechanical reversion where the vulcanizate reverts back to the gum state, thus reducing the increase in viscous or loss modulus. However, blow-out in track pads and other heavy equipment tires continues to be a problem, such that an improvement to the rubber compounds is needed.

### Summary of the invention

The present invention provides a vulcanizable rubber composition and a vulcanizate thereof for use in vehicle endless-track pads and high-load pneumatic tires, wherein the composition provides an increased resistance to blow-out when the vulcanizate product is exposed to high-repeated deflection. To this end, a rubber component consisting essentially of one or more non-halogenated rubbers is compounded with hydrotalcite. In one exemplary embodiment, the rubber component consists essentially of natural rubber. In another exemplary embodiment, the hydrotalcite is present in an amount of 3-20 parts per hundred parts of the rubber component (phr). The present invention also provides an endless rubber track for a track-laying vehicle comprising a rubber pad that is a vulcanizate of the vulcanizable rubber composition. In addition, the present invention provides a pneumatic tire for a high-load vehicle comprising a rubber tread that is a vulcanizate of the vulcanizable rubber composition.

### Detailed description

The present invention provides rubber compounds having increased blow-out resistance by virtue of the addition of hydrotalcite to a non-halogenated rubber component, such as natural rubber. Hydrotalcite is commonly used as an acid acceptor/stabilizer in halogen-containing compounds. However, the present invention resides in the discovery that hydrotalcite is effective to increase blow-out resistance in non-halogen-containing elastomer compounds. While other additives used to improve blow-out resistance operate by reducing or preventing thermal or mechanical reversion, hydrotalcite appears to work through a different mechanism, and may even produce an additive effect with reversion resistors. Hydrotalcite, by virtue of its makeup, exfoliates during mixing, and it is suspected that this ability to exfoliate contributes to the reinforcement of the rubber compound and the increase in blow-out resistance.

In its broadest form, the rubber compound of the present invention comprises a rubber component consisting essentially of one or more non-halogenated rubbers, for example natural rubber, and a hydrotalcite, as well as other known rubber compound additives appropriate for the particular use of the rubber compound. Such known additives include reinforcing fillers such as carbon black and silica, stearic acid, zinc oxide, antidegradants, coupling agents, lubricants, process oils and curing additives. The vulcanized rubber compound, i.e., the vulcanizate, may be used, for example, in the track pads of endless rubber tracks for various vehicles such as military tanks and agricultural tractors, or in the treads of pneumatic tires subjected to high loads.

In one embodiment of the present invention, the rubber component consists essentially of 100 parts by weight of natural rubber. Alternatively, the rubber component of the composition may be natural rubber in combination with one or more desired non-halogenated elastomers. For example, natural rubber may be used in combination with synthetic cis 1,4-polyisoprene, cis 1,4-polybutadiene, styrene/butadiene copolymers (aqueous emulsion polymerization prepared and organic solvent solution polymerization prepared), medium vinyl polybutadiene having a vinyl 1,2- content in a range of about 15 to about 90 percent, isoprene/butadiene copolymers, styrene/isoprene/butadiene terpolymers, nitrile/butadiene copolymers, EPDM, and/or butyl rubber. In one embodiment, the composition of the present invention is free of halogenated elastomers. It may be understood that rubber refers to natural rubber as well as synthetic elastic materials of varying chemical composition having properties similar to those of natural rubber, namely polymers that exhibit highly elastic deformation and have high elongation. The term "elastomer" may also be used interchangeably with "rubber", and refers to any elastic, rubber-like substance, such as natural or synthetic rubber.

In its naturally occurring form, hydrotalcite is mined in small quantities in Russia and Norway. Synthetic forms produced in commercial quantities may generally be described by the formula (I)

Mg₍₁₋ₓ₎Alₓ(OH)₂(CO₃)_{x/2} · nH₂O (I)

where 0.25<x<0.33. These synthetic compounds are also referred to as layered double hydroxides.

Thus, synthetic hydrotalcite as described by Formula (I) may include a mixture of various compounds within the given range of x. Synthetic forms of hydrotalcite are available from several sources, including DHT-4A and ALCAMIZER® from Kyowa Chemical Industry Co., Ltd., SORBACID® 911 from Sud-Chemie AG, HYCITE® 713 from Ciba Specialty Chemicals, and HYSAFE® from the J.M. Huber Company.

Hydrotalcite may be present in the rubber composition in the range of 3-20 phr (parts per hundred rubber). In one embodiment, the hydrotalcite is present in an amount of 3-12 phr. In yet another exemplary embodiment, the hydrotalcite is present in an amount of 5-8 phr.

While the use of hydrotalcites in the polymer industry were developed as halogen scavengers for the stabilization of polyolefins and other plastics, the compound of the present invention is based on non-halogen rubbers, such as natural rubber, such that the acid absorption mechanism with halogen-based acids is not the function of hydrotalcite in the composition, or at least is not the primary function of the hydrotalcite. Although the exact mechanism of the hydrotalcite is not positively understood, the hydrotalcite is believed to be operating under a reinforcing mechanism. As the rubber compound is mixed, the hydrotalcite exfoliates, similar to an onion losing its layers, and becomes reinforcing in nature, similar to a nanoclay.

In addition to the rubber component and hydrotalcite, the composition of the present invention may also include fillers. Commonly employed reinforcing fillers include, for example, carbon black and siliceous fillers such as precipitated silica. Fillers may be used, for example, in an amount of 10-250 phr. In one embodiment, the fillers comprise 20-100 phr of the composition.

The composition of the present invention may also include antidegradants, for example in the range of 4.5-10 phr. Such antidegradants may be a combination of antiozonants and antioxidants for rubber compositions as conventionally used for cured rubber compositions intended to be exposed to atmospheric conditions and dynamic applications. Representative examples of such antidegradants are, for example, polymerized 2,2,4-trimethyl 1,2-dihydroquinoline, which might be obtained as Flectol TMQ from the Flexsys America L.P. Company, N-1,3-dimethylbutyl-N'-phenol para-phenylenediamine, which might be obtained as Flexzone® 7F and mixed with aryl-p-phenylene diamines, such as Wingstay® 100 from Goodyear Tire and Rubber Company. Such antidegradants are well known to those having skill in such art.

Use of rubber processing oils in a range of 0-10 phr, for example 1-10 phr, may be used to enhance processability of the unvulcanized rubber composition as well as to enhance the balance of a combination of tensile strength and elongation of a sulfur vulcanized rubber composition. Rubber processing oils may include, for example, aromatic hydrocarbon oils, napthenic oils, paraffinic oils or ester oils. Aromatic rubber processing oils as well as mixtures of alkylated naphthenic and aromatic hydrocarbon rubber process oils, and their use as processing aids, are well known to those having skill in the preparation of rubber compositions.

It is readily understood by those having skill in the art that the rubber composition may be compounded by methods generally known in the rubber compounding art, such as mixing the various sulfur-vulcanizable constituent rubbers with various commonly used additive materials such as, for example: sulfur donors; curing aids, such as activators and retarders; processing additives, such as oils; resins, including tackifying resins and plasticizers; fillers; pigments; fatty acid; zinc oxides; waxes; antioxidants; antiozonants; and peptizing agents. As known to those skilled in the art, depending on the intended use of the sulfur-vulcanizable and sulfur-vulcanized material (rubbers), the additives mentioned above are selected and commonly used in conventional amounts. By way of example, a typical amount of zinc oxide is 2-10 phr, and of stearic acid is 0.5-3 phr.

Representative examples of sulfur donors, also referred to as sulfur-vulcanizing agents, include elemental sulfur (free sulfur), an amine disulfide, polymeric polysulfide and sulfur olefin adducts. In an exemplary embodiment of the present invention, the sulfur-vulcanizing agent is elemental sulfur. By way of example only, the sulfur-vulcanizing agent may be used in an amount of 0-8 phr, for example, 0.1-8 phr. Accelerators may be used to control the time and/or temperature required for vulcanization and to improve the properties of the vulcanizate. One or a combination of accelerators may be used to achieve the desired cure. Examples of accelerators that may be used include amines, disulfides, guanidines, thioureas, thiazoles, thiurams, sulfenamides, dithiocarbamates and xanthates.

The mixing of the rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, accelerators/retarders and scorch inhibitors, are typically mixed in the final productive mix stage, which typically occurs at a temperature (sometimes referred to as the ultimate temperature) lower than the mix temperature(s) of the preceding non-productive mix stage(s). The rubber composition may be subjected to a thermo-mechanical mixing step. The thermo-mechanical mixing step generally comprises a mechanical working in a mixer or extruder for a period of time suitable to produce a rubber temperature between 140°C and 190°C. The appropriate duration of the thermomechanical working varies as a function of the operating conditions and the volume and nature of the components. For example, the thermomechanical working may be from 1 to 20 minutes.

After mixing, the resulting uncured rubber compounds may be extruded to form, for example, one or more sections of a track for an endless track pad, which may then be inserted into a suitable mold and cured at a temperature of, for example, about 150°C to form a continuous track. Alternatively, the resulting compound may be cured in a mold for making pneumatic tires.

### Examples

Seven test compositions, referred to as Tests 1-7, were prepared containing various amounts and types of hydrotalcite in combination with natural rubber and various known additives. Three control samples, referred to a Controls 1-3, were prepared with the natural rubber and the same additives, but with no hydrotalcite. The compositions for the test and control samples are provided in Table 1. The compositions were then cured and subjected to numerous tests to demonstrate the effect of hydrotalcite in increasing blow-out resistance, among other things. The results show an improvement in the blow-out times and increased low strain modulus with no detrimental effects on the other properties compared to the control compositions. In addition, the optimum level of hydrotalcite in the compositions of the present invention was found to be on the order of 6 phr. For example, the use of 6 phr of hydrotalcite lowered the tangent Delta values and increased the low strain modulus of the composition in either extension or compression.

**Table 1**

| | Control 1 | Test 1 | Control 2 | Control 3 | Test 2 | Test 3 | Test 4 | Test 5 | Test 6 | Test 7 |
|---|---|---|---|---|---|---|---|---|---|---|
| ***Non-productive mixing*** | | | | | | | | | | |
| Natural rubber (parts by weight) | 100.00 | 100.00 | 100.00 | 100.00 | 100.00 | 100.00 | 100.00 | 100.00 | 100.00 | 100.00 |
| Carbon black (phr) | 56.00 | 56.00 | 56.00 | 56.00 | 56.00 | 56.00 | 56.00 | 56.00 | 56.00 | 56.00 |
| Precipitated silica (phr) | 15.00 | 15.00 | 15.00 | 15.00 | 15.00 | 15.00 | 15.00 | 15.00 | 15.00 | 15.00 |
| Stearic acid (phr) | 4.00 | 4.00 | 4.00 | 4.00 | 4.00 | 4.00 | 4.00 | 4.00 | 4.00 | 4.00 |
| Zinc oxide (phr) | 4.00 | 4.00 | 4.00 | 4.00 | 4.00 | 4.00 | 4.00 | 4.00 | 4.00 | 4.00 |
| Antidegradant (phr) | 8.25 | 8.25 | 9.75 | 9.75 | 9.75 | 9.75 | 9.75 | 9.75 | 9.75 | 9.75 |
| Coupling agent (phr) | 0.30 | 0.30 | 0.30 | 0.30 | 0.30 | 0.30 | 0.30 | 0.30 | 0.30 | 0.30 |
| Lubricant (phr) | 2.00 | 2.00 | 2.00 | 2.00 | 2.00 | 2.00 | 2.00 | 2.00 | 2.00 | 2.00 |
| Naphtenic process oil (phr) | 3.00 | 3.00 | 3.00 | 3.00 | 3.00 | 3.00 | 3.00 | 3.00 | 3.00 | 3.00 |
| Hydrotalcite (phr) | **―** | **6.00** | **―** | **―** | **3.00** | **6.00** | **12.00** | **20.00** | **6.00** | **6.00** |
| Non-productive total | 192.60 | 198.60 | 194.10 | 194.10 | 197.10 | 200.10 | 206.10 | 214.10 | 200.10 | 200.10 |
| Non-productive specific gravity | 1.167 | 1.183 | 1.165 | 1.165 | 1.173 | 1.181 | 1.196 | 1.216 | 1.181 | 1.181 |

| ***Productive mixing*** | | | | | | | | | | |
|---|---|---|---|---|---|---|---|---|---|---|
| Sulfur (phr) | 0.30 | 0.30 | 0.30 | 0.30 | 0.30 | 0.30 | 0.30 | 0.30 | 0.30 | 0.30 |
| Cure accelerators (phr) | 4.00 | 4.00 | 4.00 | 4.00 | 4.00 | 4.00 | 4.00 | 4.00 | 4.00 | ¹4.00 |
| Scorch inhibitor (phr) | 0.30 | 0.30 | 0.30 | 0.30 | 0.30 | 0.30 | 0.30 | 0.30 | 0.30 | 0.30 |
| Productive total (phr) | 197.2 | 203.2 | 198.70 | 198.70 | 201.70 | 204.70 | 210.70 | 218.70 | 204.70 | 204.70 |
| Productive specific gravity | 1.171 | 1.187 | 1.170 | 1.170 | 1.178 | 1.185 | 1.200 | 1.219 | 1.185 | 1.185 |

| ***Moonev scorch* @ *132°C*** | | | | | | | | | | |
|---|---|---|---|---|---|---|---|---|---|---|
| Minimum viscosity | 40.2 | 40.8 | 46.7 | 45.2 | 44.2 | 45.8 | 44.2 | 45.6 | 44.3 | 45.9 |
| Time to 5 pt. rise (min.) | 9.45 | 8.83 | 10.15 | 8.81 | 9.66 | 7.95 | 8.51 | 8.66 | 8.15 | 8.6 |

| ***ODR Rheometer @. 150°C*** | | | | | | | | | | |
|---|---|---|---|---|---|---|---|---|---|---|
| Minimum torque | 9.94 | 10.23 | 10.78 | 11.09 | 10.57 | 11.09 | 10.67 | 11.29 | 11.19 | 11.5 |
| Time, 1 pt. rise (min.) | 3.66 | 3.5 | 3.48 | 3.38 | 3.56 | 2.95 | 3.06 | 2.6 | 2.86 | 2.93 |
| Time to 25% cure (min.) | 7.86 | 7.61 | 6.15 | 5.73 | 6.43 | 5.95 | 6.3 | 5.41 | 5.91 | 5.98 |
| Time to 90% cure (min.) | 17.73 | 16.51 | 14.95 | 13.28 | 14.43 | 14.48 | 14.41 | 14.53 | 13.05 | 13.21 |
| Delta | 32.99 | 30.8 | 21.35 | 25.77 | 24.54 | 27 | 27.21 | 25.36 | 25.46 | 24.33 |
| Maximum torque | 42.92 | 41.03 | 32.13 | 36.85 | 35.11 | 38.09 | 37.88 | 36.65 | 36.65 | 35.83 |
| Drop @ 60 minutes | | | 0.10 | 0.20 | 0.10 | 0.11 | 0.20 | 0.21 | 0.21 | 0.21 |

| ***Physical properties cured* @ *150°C*** | | | | | | | | | | |
|---|---|---|---|---|---|---|---|---|---|---|
| Cure time (min.) | 20 | 20 | 20 | 20 | 20 | 20 | 20 | 20 | 20 | 20 |
| Tensile strength (psi) | 3592 | 3503 | 3252 | 3363 | 3429 | 3330 | 3175 | 3001 | 3225 | 3502 |
| Elongation (%) | 521 | 512 | 583 | 583 | 578 | 532 | 537 | 514 | 543 | 565 |
| 10% modulus (psi) | 152 | 175 | 146 | 153 | 161 | 171 | 174 | 186 | 168 | 157 |
| 20% modulus (psi) | 183 | 205 | 169 | 183 | 187 | 202 | 205 | 216 | 197 | 185 |
| 30% modulus (psi) | 207 | 228 | 184 | 203 | 204 | 224 | 227 | 236 | 216 | 205 |
| 40% modulus (psi) | 229 | 250 | 197 | 222 | 221 | 243 | 247 | 257 | 237 | 224 |
| 50% modulus (psi) | 252 | 273 | 211 | 241 | 240 | 266 | 270 | 280 | 259 | 245 |
| 100% modulus (psi) | 441 | 467 | 313 | 395 | 387 | 438 | 457 | 471 | 432 | 402 |
| 200% modulus (psi) | 1177 | 1195 | 766 | 967 | 955 | 1037 | 1076 | 1096 | 1024 | 954 |
| 300% modulus (psi) | 2037 | 2045 | 1411 | 1645 | 1654 | 1774 | 1770 | 1777 | 1713 | 1615 |
| 400% modulus (psi) | 2805 | 2768 | 2116 | 2308 | 2338 | 2472 | 2354 | 2325 | 1357 | 2238 |
| 500% modulus (psi) | 3461 | 3435 | 2732 | 2889 | 2937 | 3118 | 2959 | 2928 | 2964 | 2822 |
| Shore A hardness | 76 | 76 | 70 | 73 | 72 | 74 | 74 | 73 | 73 | 73 |
| Tear strength die B (ASTM D624) (psi) | 764 | 872 | 822 | 849 | 862 | 806 | 802 | 788 | 844 | 836 |
| Tear strength die B @ 121°C (ASTM D624) (psi) | 580 | 561 | 639 | 604 | 644 | 551 | 546 | 517 | 584 | 550 |
| Tear strength die C @ 121°C (ASTM D624) (psi) | 654 | 629 | 608 | 677 | 670 | 610 | 639 | 535 | 628 | 608 |

| ***Dispersagrader 1000*** | | | | | | | | | | |
|---|---|---|---|---|---|---|---|---|---|---|
| X (dispersion index) | 2.26 | 5.81 | 3.12 | 3.59 | 3.03 | 3.95 | 4.81 | 6.10 | 5.67 | 4.55 |
| Y (particle size0 | 7.29 | 9.7 | 8.35 | 8.38 | 8.30 | 8.92 | 9.34 | 9.69 | 9.53 | 8.87 |
| Total white area | 11.9 | 2.9 | 6.80 | 8.30 | 7.80 | 6.00 | 4.30 | 2.90 | 4.70 | 6.80 |

| ***Zwick rebound*** | | | | | | | | | | |
|---|---|---|---|---|---|---|---|---|---|---|
| 23°C | 32.4 | 31.6 | 33.2 | 32.9 | 32.8 | 33.4 | 32.1 | 30.6 | 33.1 | 33.1 |
| 100°C | 53 | 52.6 | 49.2 | 51.7 | 50.6 | 52.2 | 50.6 | 49.2 | 51.4 | 51.1 |

| ***DIN abrasion (ASTM* D5963)** | | | | | | | | | | |
|---|---|---|---|---|---|---|---|---|---|---|
| Abrasive power | 192 | 192 | 187 | 187 | 187 | 187 | 187 | 187 | 187 | 187 |
| Average mass loss(g) | 196 | 195 | 246 | 201 | 212 | 199 | 221 | 245 | 216 | 228 |
| Density (g/cc) | 1.162 | 1.181 | 1.18 | 1.167 | 1.174 | 1.187 | 1.201 | 1.22 | 1.187 | 1.187 |
| Relative volume loss | 175.7 | 171.99 | 222.97 | 184.21 | 193.13 | 179.3 | 196.81 | 214.78 | 194.62 | 205.43 |

| ***Compression modulus*** | | | | | | | | | | |
|---|---|---|---|---|---|---|---|---|---|---|
| 10% | 167 | 174 | 135 | 165 | 160 | 174 | 177 | 180 | 175 | 172 |
| 20% | 254 | 263 | 203 | 246 | 237 | 260 | 259 | 262 | 256 | 251 |
| 30% | 353 | 364 | 279 | 339 | 181 | 359 | 355 | 359 | 352 | 342 |
| 40% | 497 | 511 | 385 | 472 | 451 | 501 | 498 | 501 | 491 | 474 |

| ***Flexometer (ASTM* D623)** | | | | | | | | | | |
|---|---|---|---|---|---|---|---|---|---|---|
| Temp @ 5 min (°C) | 137 | 137 | 141 | 137.5 | 149.3 | 134 | 138 | 144 | 136 | 141 |
| Temp @ blow-out (°C) | 160 | 159 | 157 | 158 | 157 | 158 | 158 | 159 | 157 | 159 |
| Time @ blow-out (min.) | 24.0 | 47.0 | 38 | 33 | 7.8 | 46.4 | 33 | 27.5 | 41.2 | 44 |

| ***Goodrich flexometer*** | | | | | | | | | | |
|---|---|---|---|---|---|---|---|---|---|---|
| Delta T (°C) | 35.9 | 35.8 | 37.3 | 34.5 | 34 | 34.4 | 36 | 37.2 | 35.4 | 35 |
| Set (%) | 2.827 | | 4.186 | 3.486 | 3.134 | 3.131 | 3.094 | 3.04 | 3.137 | 3.165 |
| Static compression (%) | 90.58 | 92.85 | 84.6 | 89.42 | 88.64 | 90.61 | 91.38 | 91.82 | 90.98 | 90.62 |

| ***RSA II temperature sweep 11 Hz. 0.1% strain*** | | | | | | | | | | |
|---|---|---|---|---|---|---|---|---|---|---|
| Tangent delta @ peak | 0.6131 | 0.6133 | 0.5896 | 0.5977 | 0.6132 | 0.5999 | 0.5804 | 0.5825 | 0.5883 | 0.5715 |
| Temp @ peak °C | -55.24 | -55.2 | -50.4 | -50.25 | -50.2 | -49.91 | -50.23 | -50.4 | -50.35 | -50.41 |
| Tangent delta @ 0°C | 0.0804 | 0.0773 | 0.0848 | 0.0803 | 0.0823 | 0.0756 | 0.0802 | 0.0803 | 0.0787 | 0.0769 |
| Tangent delta @ 20°C | 0.0882 | 0.0849 | 0.1003 | 0.1209 | 0.121 | 0.1128 | 0.1196 | 0.123 | 0.1184 | 0.1193 |
| Tangent delta @ 60°C | | | | | | | | | | |

| ***The BF Goodrich cut and chip test*** | | | | | | | | | | |
|---|---|---|---|---|---|---|---|---|---|---|
| Test @ 1 Hz, 760 RPM for 10 minutes with weight | | | | | | | Control = | 3.74 | | |
| Weight loss (g) | | | 4.14 | 4.86 | 4.59 | 5.33 | 5.50 | 5.82 | 5.24 | 5.15 |

| | | | | | | | | | | |
|---|---|---|---|---|---|---|---|---|---|---|
| ¹ Tests 1-5; DHT-4A, Kyowa Chemical Co.; Test 6: HYSAFE® 510, J.M. Huber Co.; Test 7: HYSAFE® 539, J.M. Huber Co. | | | | | | | | | | |

## Claims

1. A vulcanizable rubber composition comprising a rubber component and an additive for increasing blow-out resistance, wherein the rubber component consists of one or more non-halogenated rubbers, and wherein the additive is a hydrotalcite present in an amount of 3-20 parts per hundred parts of the rubber component (phr).

2. The composition of claim 1, wherein the rubber component consists of natural rubber and optionally a non-halogenated elastomer.

3. The composition of any preceding claim, further comprising at least one reinforcing filler selected from carbon black and silica.

4. The composition of any preceding claim, further comprising at least one antidegradant selected from antiozonants and antioxidants, at least one processing oil, and at least one sulfur-vulcanizing agent.

5. The composition of any preceding claim, **characterized in that** the hydrotalcite has the formula Mg₍₁₋ₓ₎Alₓ(OH)₂(CO₃)_{x/2} · nH₂O, wherein 0.25<x<0.33.

6. The composition of at least one of the previous claims, further comprising 10-250 phr of a reinforcing filler comprising carbon black and silica, 4.5-10 phr of an antidegradant, 1-10 phr of a processing oil, 2-10 phr of zinc oxide, 0.5-5 phr of stearic acid, and 0.1-8 phr of a vulcanizing agent, wherein the rubber component consists of 100 parts by weight natural rubber and the hydrotalcite has the formula Mg₍₁₋ₓ₎Alₓ(OH)₂(CO₃)_{x/2} · nH₂O, wherein 0.25<x<0.33.

7. The composition of any preceding claim, wherein the hydrotalcite is present in an amount of 3-12 phr.

8. The composition of any preceding claim, wherein the hydrotalcite is present in an amount of 5-8 phr.

9. An endless rubber track for a track-laying vehicle comprising a rubber pad that is a vulcanizate of the composition of any preceding claim.

10. A pneumatic tire for a high-load vehicle comprising a rubber tread that is a vulcanizate of the composition of any preceding claim.
